# FASCICULE DE BREVET EUROPEEN

(11) **EP 1 884 164 B1**
(45) Date de publication et mention de la délivrance du brevet: **29.04.2009**
(21) Numéro de dépôt: 07290880.9
(22) Date de dépôt: 12.07.2007
(51) Int. Cl.: A23B 7/144, B05B 7/08, A23L 3/3409, A23N 15/06

(54) **Appareil de thermonébulisation d'une composition liquide pour le traitement de fruits ou de légumes et utilisation correspondante**
Vorrichtung für die Verneblung einer flüssigen Substanz zur Behandlung von Obst und Gemüse und deren Verwendung
Device for the fog treatment of a liquid composition for the treatment of fruits or vegetables and corresponding use

(30) Priorité: 24.07.2006 FR 0606757
(43) Date de publication de la demande: 06.02.2008
(73) Titulaire: XEDA INTERNATIONAL, 13670 Saint-Andiol (FR)
(72) Inventeur: Sardo, Alberto, 13160 Chateaurenard (FR)
(74) Mandataire: Domenego, Bertrand

(56) Documents cités:
- DE-U- 1 769 399
- FR-A1- 2 371 969
- GB-A- 2 318 294
- GB-A- 2 387 797
- US-A- 5 935 660

## Description

La présente invention concerne un appareil de thermonébulisation d'une composition liquide pour le traitement de fruits ou de légumes.

L'invention s'applique par exemple au traitement de fruits ou de légumes dans une enceinte fermée, telle qu'une chambre de stockage ou une serre.

Dans une telle application, le brouillard formé par l'appareil, constitué de fines gouttelettes de la composition liquide, se répand dans l'enceinte. Les gouttelettes se déposent sur les fruits ou légumes en y créant une fine couche d'enrobage assurant ainsi un traitement satisfaisant des fruits ou des légumes.

FR-2 566 681 décrit un appareil de thermonébulisation qui comprend un ventilateur électrique envoyant de l'air dans un premier conduit muni intérieurement d'une résistance électrique de chauffage de l'air à une température comprise entre 350 et 600°C. Ce premier conduit se rétrécit en aval de la résistance électrique et débouche dans un deuxième conduit dans lequel l'air chauffé atteint une vitesse supérieure à 100m/s. Une pompe prélève la composition liquide dans un réservoir et l'injecte dans le deuxième conduit afin qu'elle se mélange à l'air et forme ainsi avec celui-ci le brouillard.

FR-2 791 910 décrit un appareil de la même nature destiné à obtenir des gouttelettes plus fines en sortie de l'appareil, de telle sorte que l'enrobage des fruits ou légumes est plus régulier. Plus précisément, on produit à cette fin un brouillard de thermonébulisation présentant une température de 200 à 280°C avec une vitesse linéaire comprise entre 110 et 140 m/s.

Les appareils de thermonébulisation de ces deux documents s'avèrent satisfaisants mais restent relativement coûteux notamment du fait de la présence d'une pompe d'aspiration de la composition liquide.

Un but de l'invention est donc de résoudre ce problème en fournissant un appareil de thermonébulisation pour traiter des fruits ou des légumes qui soit de coût plus réduit.

A cet effet, l'invention a pour objet un appareil de thermonébulisation d'une composition liquide pour le traitement de fruits ou de légumes, caractérisé en ce qu'il comprend :
- un réservoir de réception de la composition liquide,
- un ventilateur comprenant des pales de mise en mouvement de l'air située dans une zone du réservoir au-dessus de la composition liquide,
- un carter de canalisation disposé au-dessus de ladite zone du réservoir, le carter présentant au moins une ouverture d'entrée d'air extérieur à l'appareil et une sortie d'évacuation et communiquant avec ladite zone du réservoir afin que le ventilateur crée un flux d'air dans le carter,
- un pulvérisateur de projection par centrifugation de la composition liquide sous forme de gouttelettes dans le carter afin d'y former par mélange avec le flux d'air, dans une région de mélange du carter située en aval du ventilateur par rapport au sens de circulation du flux d'air, un brouillard de gouttelettes de la composition liquide,
- un conduit d'aspiration de la composition liquide vers le pulvérisateur sous l'effet de la circulation du flux d'air dans la région de mélange, et
- un dispositif de chauffage de l'air disposé en amont de la région de mélange du carter.

Selon des modes particuliers de réalisation, l'appareil peut comprendre l'une ou plusieurs des caractéristiques suivantes, prise(s) isolément ou selon toutes les combinaisons techniquement possibles :
- le dispositif de chauffage est disposé en amont de la ou des ouverture(s) d'entrée d'air du carter ;
- le carter converge, en aval de la zone de mélange, dans le sens de circulation du flux d'air ;
- le carter a une forme sensiblement conique centrée sur un axe, les pales du ventilateur sont destinées à tourner autour de l'axe et le conduit d'aspiration est sensiblement centré sur l'axe ;
- le pulvérisateur comprend une grille d'atomisation de la composition liquide et un centrifugeur pour projeter radialement la composition liquide, le centrifugeur étant destiné à être entraîné en rotation autour de l'axe ;
- le centrifugeur comprend une coupelle en communication avec le conduit d'amenée ;
- l'appareil comprend un moteur commun d'entraînement du ventilateur et du pulvérisateur ;
- l'appareil comprend une chambre de chauffage d'air disposée autour du carter et en communication avec la ou chaque ouverture d'entrée d'air, et le dispositif de chauffage est disposé dans la chambre de chauffage ;
- le dispositif de chauffage est adapté pour chauffer l'air à une température supérieure à 150°C ;
- le dispositif de chauffage est adapté pour chauffer l'air à une température inférieure à 300°C ;
- le ventilateur est adapté pour produire un débit d'air supérieur à 10m³/h ;
- le ventilateur est adapté pour produire un débit d'air inférieur à 50m³/h ;
- l'appareil est adapté pour produire un brouillard de température supérieure à 100°C ;
- l'appareil est adapté pour produire un brouillard de température inférieure à 250°C ;
- l'appareil est adapté pour produire un brouillard ayant une vitesse supérieure à 0,1 m/s ;
- l'appareil est adapté pour produire un brouillard ayant une vitesse inférieure à 5 m/s.

L'invention a également pour objet l'utilisation d'un appareil tel que défini ci-dessus pour le traitement de fruits ou de légumes.

Selon des modes particuliers de réalisation, l'utilisation peut comprendre l'une ou plusieurs des caractéristiques suivantes, prise(s) isolément ou selon toutes les combinaisons techniquement possibles :
- on produit un brouillard de température supérieure à 100°C ;
- on produit un brouillard de température inférieure à 250°C ;
- on produit un brouillard ayant une vitesse supérieure à 0,1 m/s ; et
- on produit un brouillard ayant une vitesse inférieure à 5 m/s.

L'invention sera mieux comprise à la lecture de la description qui va suivre, donnée uniquement à titre d'exemple, et faite en se référant aux dessins annexés, sur lesquels :
- la figure 1 est une vue schématique latérale d'un appareil de thermonébulisation selon l'invention,
- la figure 2 est une vue schématique latérale éclatée de l'appareil de la figure 1,
- la figure 3 est une vue de dessous illustrant le pulvérisateur et le ventilateur de l'appareil des figures 1 et 2, et
- la figure 4 est une vue partielle schématique latérale et en coupe illustrant le trajet de l'air dans l'appareil de la figure 1.

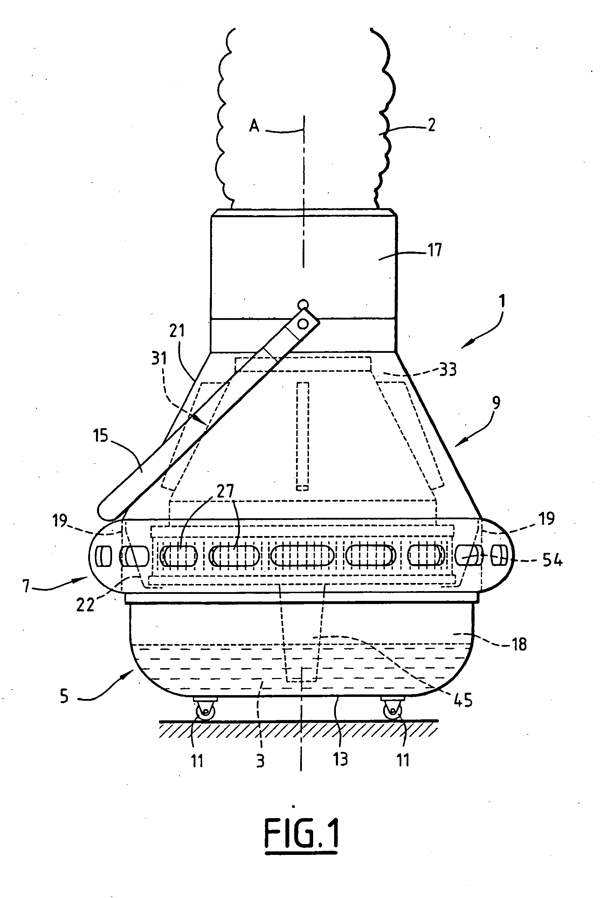

La figure 1 illustre un appareil de thermonébulisation 1 pour créer un brouillard 2 de fines gouttelettes d'une composition liquide 3 afin de traiter des fruits ou des légumes.

L'appareil 1 a une forme générale de révolution autour d'un axe vertical A et comprend, comme illustré par la figure 1 :
- un réservoir 5 de réception de la composition liquide 3,
- une chambre 7 de chauffage d'un flux d'air destiné à former, par mélange avec des gouttelettes de la composition 3, le brouillard 2, et
- un carter 9 de canalisation du brouillard formé 2.

Afin de faciliter son déplacement, l'appareil 1 peut en outre comprendre des roulettes 11, éventuellement prévues sur le fond 13 du réservoir 5, et une poignée 15 éventuellement prévue à l'extrémité supérieure du carter 9.

Dans l'exemple représenté également, l'appareil 1 est muni d'un manchon 17 de sortie du brouillard 2, lequel manchon 17 est disposé en aval d'une sortie 20 du carter 9.

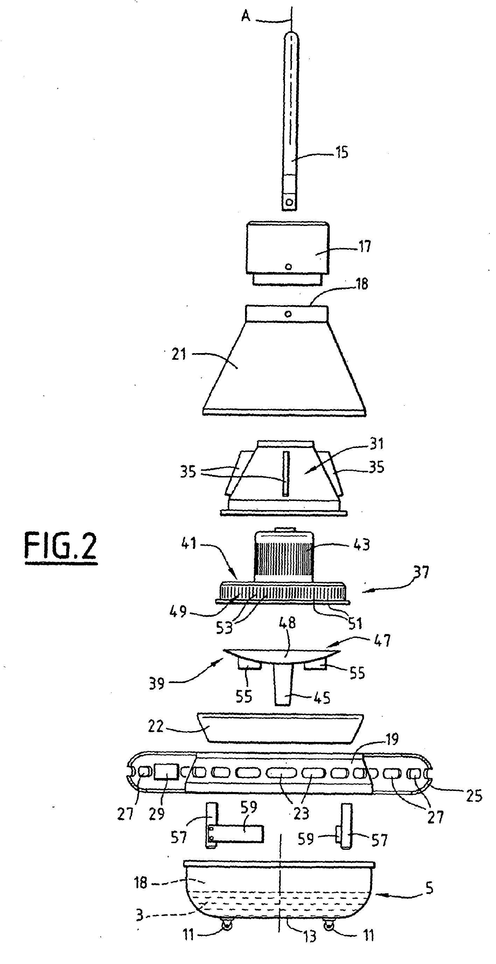

Comme illustré par la figure 2, le réservoir 5 est un bac concave de forme générale de révolution autour de l'axe A. Il délimite une zone 18 au-dessus de la composition liquide 3.

Le carter 9 comprend un premier tronçon amont ou inférieur 19 et un deuxième tronçon aval ou supérieur 21.

Un déflecteur 22 est disposé à l'intérieur du premier tronçon 19. Le déflecteur 22 est fixé par son bord supérieur au bord supérieur du tronçon 19.

Le premier tronçon 19 est percé, dans l'exemple représenté, d'une série d'ouvertures 23 d'entrée d'air.

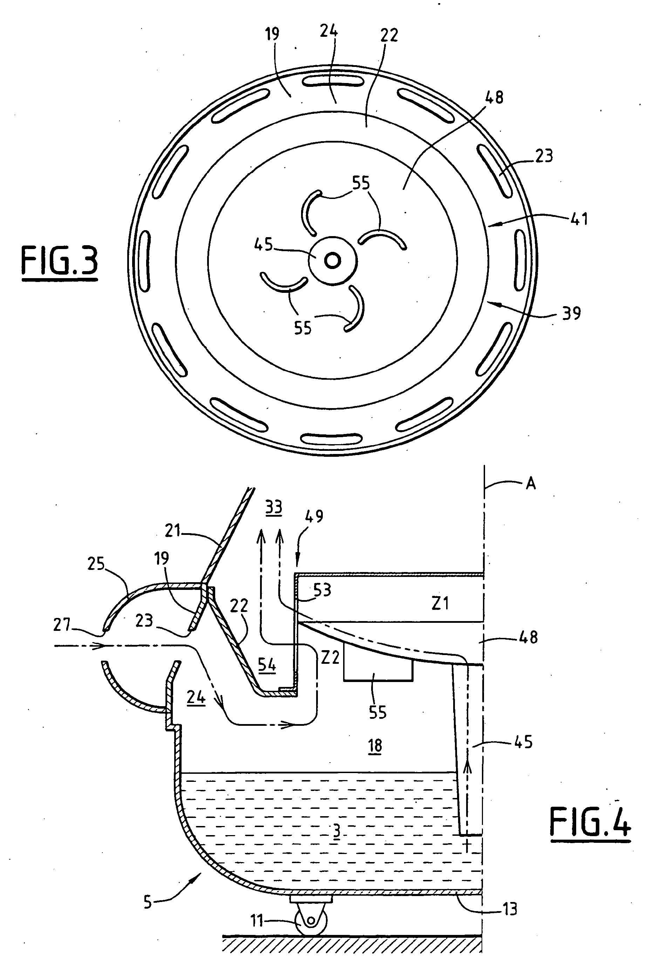

Ces ouvertures 23 sont en communication avec l'intérieur de la chambre 7 ainsi qu'avec l'espace 24 annulaire délimité entre le déflecteur 22 et le tronçon 19. Cet espace 24 communique avec la zone 18 du réservoir 5 (fig. 4).

Comme cela sera décrit par la suite, le premier tronçon 19 sert à l'admission du flux d'air dans le carter 9 et au mélange de ce dernier avec la composition liquide 3 afin de former le brouillard 2.

Les parois de la chambre de chauffage 7 sont formées d'une part par le premier tronçon 19 et d'autre part par une enveloppe 25 qui entoure le premier tronçon 19. Cette enveloppe 25 a dans l'exemple représenté sensiblement une forme de partie de tore centré sur l'axe A.

L'enveloppe 25 est percée d'ouvertures 27 d'entrée d'air dont le nombre est, dans l'exemple représenté, plus réduit que le nombre d'ouvertures 23 ménagées dans le premier tronçon 19 du carter 9.

Au moins un dispositif de chauffage 29, par exemple sous forme d'une ou de plusieurs résistances électriques, est disposé à l'intérieur de la chambre 7. Ces résistances peuvent être réparties angulairement régulièrement autour de l'axe A.

La chambre de chauffage 7 entoure extérieurement le premier tronçon 19 du carter 9 et fait donc saillie radialement par rapport au carter 9.

Le deuxième tronçon 21 du carter 9 s'étend verticalement sur une hauteur nettement plus importante que le premier tronçon 19.

Un guide 31 est disposé à l'intérieur du deuxième tronçon 21 afin de délimiter avec celui-ci un espace 33. Le guide 31 a une forme sensiblement conique centrée sur l'axe A et est muni d'ailettes 35 de guidage en saillie radialement vers l'extérieur. Ces ailettes 35 sont dans l'exemple représenté au nombre de quatre et sont réparties sensiblement régulièrement autour de l'axe A. Le guide 31 est monté sur le fond 13 du réservoir 5 par l'intermédiaire d'un ensemble 37 de ventilation et de pulvérisation.

L'ensemble 37 comprend un ventilateur 39, un pulvérisateur 41 et, dans l'exemple représenté, un moteur commun 43 qui peut être, toujours à titre d'exemple, un moteur électrique. L'ensemble 37 comprend également un conduit 45 d'amenée de la composition liquide 3 vers le pulvérisateur 41.

Le pulvérisateur 41 comprend un centrifugeur 47 et une grille d'atomisation 49. La grille 49 a un contour sensiblement circulaire et comprend des âmes 51 verticales qui délimitent entre elles des passages 53 pour des gouttelettes de la composition liquide 3.

La grille 49 est disposée en regard du premier tronçon 19 du carter 9 et délimite à l'intérieur du déflecteur 22 un espace 54 annulaire qui communique d'une part avec l'espace 33 délimité entre le deuxième tronçon 21 du carter 9 et le guide intérieur 31, et d'autre part avec la zone 18 du réservoir 5 située au-dessus de la composition 3 (voir figure 4).

La grille 49 est fixée d'une part au guide 31 et d'autre part au fond du réservoir 5. Le bord inférieur de la grille 49 est au contact du bord inférieur du déflecteur 22.

Le centrifugeur 47 comprend une coupelle 48 de concavité dirigée vers le haut et dont le fond porte le conduit 45 et communique avec celui-ci.

Le conduit 45 et la coupelle 48 sont par exemple formés d'une seule pièce et sont centrés sur l'axe A. Le conduit 45 a une forme convergeant vers le bas et prolonge la coupelle 48 vers le bas jusqu'à plonger dans la composition liquide 3.

Comme illustré par la figure 4, la coupelle 48 est disposée dans la grille 49 et a sensiblement le même diamètre que cette dernière. La coupelle 48 est disposée à un niveau intermédiaire à l'intérieur de la grille 49 pour délimiter avec la grille 49, au-dessus de la coupelle 48, une région Z1 de centrifugation. De même une région Z2 de ventilation est délimitée sous la coupelle 48, à l'intérieur de la grille 49.

La coupelle 48 est liée à l'arbre d'entraînement du moteur 43 si bien que le moteur 43 peut l'entraîner en rotation autour de l'axe A par rapport au réservoir 5.

Le ventilateur 39 comprend des pales 55 (voir figs 2 et 3) qui sont, dans l'exemple représenté, disposées sous la coupelle 48. Plus précisément elles font saillie vers le bas depuis celle-ci mais ne s'étendent pas jusqu'à la composition liquide 3. Les pales 55 sont dans l'exemple représenté au nombre de quatre et sont réparties angulairement de manière sensiblement régulière autour de l'axe A. Elles peuvent être par exemple venues de matière avec la coupelle 48.

L'ensemble 37 prend appui sur le fond 13 du réservoir 5 par l'intermédiaire de pieds 57 qui portent des lames brise-vagues 59 dont le rôle est d'éviter la formation de vortex dans la composition liquide 3, ce qui pourrait nuire à l'aspiration décrite ultérieurement. Les pieds 57 assurent par ailleurs la fixité du guide 31 et de la grille 49 par rapport au réservoir 5.

Le fonctionnement de l'appareil 1 est le suivant.

Le moteur 43 assure l'entraînement en rotation de la coupelle 48 dont les pales 55 mettent en mouvement l'air situé dans la zone Z2 et au-dessus de la composition 3 dans la zone 18 du réservoir 5.

Cette mise en mouvement de l'air produit deux effets :
- la création d'un flux d'air ascendant dans l'espace 54 entre la grille 49 et le déflecteur 22, et
- la remontée de la composition liquide 3 dans le conduit 45 vers le centrifugeur 47.

Plus précisément, et comme illustré par les flèches en trait mixte sur la figure 4, le flux d'air est aspiré depuis l'extérieur au travers des ouvertures 27, puis traverse la chambre de chauffage 7 en se réchauffant au contact du dispositif de chauffage 29, et traverse ensuite les ouvertures 23 ménagées dans le premier tronçon 19 afin d'atteindre l'espace 24. L'air est renvoyé par le déflecteur 22 vers la zone 18 puis remonte dans la zone Z2 avant d'être envoyé, au travers de la grille 49, dans l'espace 54 puis dans l'espace 33. Du fait de l'écoulement d'air, une dépression est créée dans l'espace 54, ce qui provoque l'aspiration de la composition liquide 3 au travers du conduit 45. En d'autres termes, la remontée de liquide dans le conduit 45 est assurée par effet Venturi.

Le liquide ayant remonté au travers du conduit 45 dans la coupelle 48 est projeté radialement vers l'extérieur, dans la zone Z1 du fait de la rotation autour de l'axe A de la coupelle 48, et vient s'atomiser sur la grille 49 en produisant des fines gouttelettes qui passent au travers des passages 53. Ces fines gouttelettes pénètrent alors dans l'espace 54 et se mélangent au flux d'air chauffé pour former le brouillard 2. Le trajet de la composition liquide 3 est matérialisé par des flèches en double trait mixte.

Le brouillard 2 s'écoule ensuite vers le haut dans l'espace 33 délimité entre le guide 31 et le deuxième tronçon 21 du carter 9. On observera que la forme convergente du deuxième tronçon 21 permet d'accélérer cet écoulement.

A titre d'exemple uniquement, la composition 3 peut avoir la composition suivante :
- eugenol 20%
- diisobutylcetone 25%
- dipropylène glycol 55%

Le dispositif de chauffage 29 peut être par exemple adapté pour chauffer l'air à une température d'environ 200°C et le ventilateur 39 être adapté pour produire un débit d'air d'environ 30 m³/h. Ainsi, en sortie du carter 9, le brouillard 2 peut avoir une température d'environ 60°C avec une vitesse mesurée selon l'axe vertical A de 1 m/s.

Plus généralement, l'appareil 1 sera de préférence adapté pour que :
- la température de chauffage de l'air dans la chambre 7 soit supérieure à 150°C et de préférence inférieure à 300°C, et/ou
- le débit d'air produit par le ventilateur est supérieur à 10 m³/h et de préférence inférieur à 50 m³/h, et/ou
- la vitesse verticale du brouillard 2 en sortie du carter 9 soit supérieure à 0,1 m/s et de préférence inférieure à 5 m/s, et/ou,
- la température du brouillard 2 en sortie du carter 9 soit supérieure à 100°C et de préférence inférieure à 250°C.

L'appareil 1 décrit précédemment est d'une structure simple et peu coûteuse, notamment parce qu'il ne nécessite pas l'emploi d'une pompe.

En outre, il permet de produire un brouillard 2 de bonne qualité et ainsi d'obtenir un traitement satisfaisant des fruits ou des légumes.

En outre, le dispositif de chauffage 29 n'étant pas au contact de la composition liquide 3, les risques d'inflammation, qui pourraient être dus aux fortes températures atteintes et à la présence de composés inflammables dans la composition 3, sont réduits. L'appareil a donc un fonctionnement sûr.

De manière générale, l'appareil 1 décrit précédemment peut présenter d'autres variantes.

Ainsi, et à titre d'exemple uniquement, le dispositif de chauffage 29 peut être situé à l'intérieur du carter 9, tout en restant en amont de la région 54 de mélange entre l'air et la composition liquide 3.

Une chambre de chauffage 7 n'est pas nécessairement prévue pour contenir le dispositif de chauffage 29.

Les nombres d'ouvertures 23 et 27 peuvent être variés et il est même possible de ne prévoir qu'une seule ouverture 23 et une seule ouverture 27.

On peut également envisager d'utiliser des moteurs différents pour le ventilateur 39 et pour le centrifugeur 47.

De même, le ou les moteurs peuvent être placés à un autre emplacement, par exemple sous le réservoir 5.

## Revendications

1. Appareil (1) de thermonébulisation d'une composition liquide (3) pour le traitement de fruits ou de légumes, **caractérisé en ce qu'**il comprend :
- un réservoir (5) de réception de la composition liquide (3),
- un ventilateur (39) comprenant des pales (55) de mise en mouvement de l'air situé dans une zone (18) du réservoir (5) au-dessus de la composition liquide (3),
- un carter (9) de canalisation disposé au-dessus de ladite zone (18) du réservoir (5), le carter (9) présentant au moins une ouverture (23) d'entrée d'air extérieur à l'appareil (1) et une sortie d'évacuation (20) et communiquant avec ladite zone (18) du réservoir (5) afin que le ventilateur (39) crée un flux d'air dans le carter (9),
- un pulvérisateur (41) de projection par centrifugation de la composition liquide (3) sous forme de gouttelettes dans le carter (9) afin d'y former par mélange avec le flux d'air, dans une région (54) de mélange du carter située en aval du ventilateur (39) par rapport au sens de circulation du flux d'air, un brouillard (2) de gouttelettes de la composition liquide (3),
- un conduit (45) d'aspiration de la composition liquide (3) vers le pulvérisateur (41) sous l'effet de la circulation du flux d'air dans la région (54) de mélange, et
- un dispositif (29) de chauffage de l'air disposé en amont de la région de mélange (54) du carter (9).

2. Appareil selon la revendication 1, **caractérisé en ce que** le dispositif de chauffage (29) est disposé en amont de la ou des ouverture(s) d'entrée d'air (23) du carter (9).

3. Appareil selon la revendication 1 ou 2, **caractérisé en ce que** le carter (9) converge, en aval de la zone de mélange (54), dans le sens de circulation du flux d'air.

4. Appareil selon l'une des revendications précédentes, **caractérisé en ce que** le carter (9) a une forme sensiblement conique centrée sur un axe (A), **en ce que** les pales (55) du ventilateur (39) sont destinées à tourner autour de l'axe (A) et **en ce que** le conduit d'aspiration (45) est sensiblement centré sur l'axe (A).

5. Appareil selon la revendication 4, **caractérisé en ce que** le pulvérisateur (4) comprend une grille (49) d'atomisation de la composition liquide (3) et un centrifugeur (47) pour projeter radialement la composition liquide (3), le centrifugeur (47) étant destiné à être entraîné en rotation autour de l'axe (A).

6. Appareil selon la revendication 5, **caractérisé en ce que** le centrifugeur (47) comprend une coupelle (48) en communication avec le conduit d'amenée (45).

7. Appareil selon l'une des revendications 4 à 6, **caractérisé en ce qu'**il comprend un moteur (43) commun d'entraînement du ventilateur (39) et du pulvérisateur (41).

8. Appareil selon l'une des revendications précédentes, **caractérisé en ce qu'**il comprend une chambre (7) de chauffage d'air disposée autour du carter (9) et en communication avec la ou chaque ouverture d'entrée d'air (23), et **en ce que** le dispositif de chauffage (29) est disposé dans la chambre de chauffage (7).

9. Appareil selon l'une des revendications précédentes, **caractérisé en ce que** le dispositif de chauffage (29) est adapté pour chauffer l'air à une température supérieure à 150°C.

10. Appareil selon la revendication 9, **caractérisé en ce que** le dispositif de chauffage (29) est adapté pour chauffer l'air à une température inférieure à 300°C.

11. Appareil selon l'une des revendications précédentes, **caractérisé en ce que** le ventilateur (39) est adapté pour produire un débit d'air supérieur à 10m³/h.

12. Appareil selon la revendication 11, **caractérisé en ce que** le ventilateur (39) est adapté pour produire un débit d'air inférieur à 50m³/h.

13. Appareil selon l'une des revendications précédentes, **caractérisé en ce qu'**il est adapté pour produire un brouillard de température supérieure à 100°C.

14. Appareil selon la revendication 13, **caractérisé en ce qu'**il est adapté pour produire un brouillard de température inférieure à 250°C.

15. Appareil selon l'une des revendications précédentes, **caractérisé en ce qu'**il est adapté pour produire un brouillard ayant une vitesse supérieure à 0,1 m/s.

16. Appareil selon la revendication 15, **caractérisé en ce qu'**il est adapté pour produire un brouillard ayant une vitesse inférieure à 5 m/s.

17. Utilisation d'un appareil (1) selon l'une des revendications précédentes pour le traitement de fruits ou de légumes.

18. Utilisation d'un appareil selon la revendication 17, **caractérisée en ce que** l'on produit un brouillard (2) de température supérieure à 100°C.

19. Utilisation d'un appareil selon la revendication 18, **caractérisée en ce que** l'on produit un brouillard (2) de température inférieure à 250°C.

20. Utilisation d'un appareil selon l'une des revendications 16 à 19, **caractérisée en ce que** l'on produit un brouillard (2) ayant une vitesse supérieure à 0,1 m/s.

21. Utilisation d'un appareil selon la revendication 20, **caractérisée en ce que** l'on produit un brouillard (2) ayant une vitesse inférieure à 5 m/s.

## Claims

1. Device (1) for thermal nebulisation of a liquid composition (3) for treating fruit or vegetables, **characterised in that** it comprises:
- a container (5) for receiving the liquid composition (3),
- a fan (39) which comprises blades (55) for moving the air located in a zone (18) of the container (5) above the liquid composition (3),
- a channelling housing (9) which is arranged above the zone (18) of the container (5), the housing (9) having at least one opening (23) for introducing outside air into the device (1) and a discharge outlet (20), and communicating with the zone (18) of the container (5) in order for the fan (39) to create a flow of air in the housing (9),
- a device (41) for projection spraying by means of centrifuging the liquid composition (3) in the form of droplets in the housing (9) in order to form, by mixing with the flow of air, in a mixing region (54) of the housing located downstream of the fan (39) relative to the circulation direction of the flow of air, a mist (2) of droplets of the liquid composition (3),
- a conduit (45) for sucking the liquid composition (3) towards the sprayer (41) under the effect of the circulation of the flow of air in the mixing region (54), and
- a device (29) for heating the air arranged upstream of the mixing region (54) of the housing (9).

2. Device according to claim 1, **characterised in that** the heating device (29) is arranged upstream of the air inlet opening(s) (23) of the housing (9).

3. Device according to claim 1 or 2, **characterised in that** the housing (9) converges, downstream of the mixing zone (54), in the direction of circulation of the flow of air.

4. Device according to any one of the preceding claims, **characterised in that** the housing (9) has a substantially conical shape which is centred on an axis (A), **in that** the blades (55) of the fan (39) are intended to rotate about the axis (A) and **in that** the suction conduit (45) is substantially centred on the axis (A).

5. Device according to claim 4, **characterised in that** the sprayer (4) comprises a grid (49) for atomising the liquid composition (3) and a centrifuge (47) for radially projecting the liquid composition (3), the centrifuge (47) being intended to be driven in terms of rotation about the axis (A).

6. Device according to claim 5, **characterised in that** the centrifuge (47) comprises a cup-like member (48) which is in communication with the conveying conduit (45).

7. Device according to any one of claims 4 to 6, **characterised in that** it comprises a common motor (43) for driving the fan (39) and the sprayer (41).

8. Device according to any one of the preceding claims, **characterised in that** it comprises a chamber (7) for heating air which is arranged around the housing (9) and which is in communication with the or each air inlet opening (23), and **in that** the heating device (29) is arranged in the heating chamber (7).

9. Device according to any one of the preceding claims, **characterised in that** the heating device (29) is suitable for heating the air to a temperature greater than 150°C.

10. Device according to claim 9, **characterised in that** the heating device (29) is suitable for heating the air to a temperature less than 300°C.

11. Device according to any one of the preceding claims, **characterised in that** the fan (39) is suitable for producing a flow rate of air greater than 10m³/h.

12. Device according to claim 11, **characterised in that** the fan (39) is suitable for producing a flow rate of air less than 50 m³/h.

13. Device according to any one of the preceding claims, **characterised in that** it is suitable for producing a mist having a temperature greater than 100°C.

14. Device according to claim 13, **characterised in that** it is suitable for producing a mist having a temperature less than 250°C.

15. Device according to any one of the preceding claims, **characterised in that** it is suitable for producing a mist having a speed greater than 0.1 m/s.

16. Device according to claim 15, **characterised in that** it is suitable for producing a mist having a speed less than 5m/s.

17. Use of a device (1) according to any one of the preceding claims for treating fruit or vegetables.

18. Use of a device according to claim 17, **characterised in that** a mist (2) is produced having a temperature greater than 100°C.

19. Use of a device according to claim 18, **characterised in that** a mist (2) is produced having a temperature less than 250°C.

20. Use of a device according to any one of claims 16 to 19, **characterised in that** a mist (2) is produced having a speed greater than 0.1 m/s.

21. Use of a device according to claim 20, **characterised in that** a mist (2) is produced having a speed less than 5m/s.

## Patentansprüche

1. Vorrichtung (1) für die Verneblung einer flüssigen Substanz (3) zur Behandlung von Obst und Gemüse, **dadurch gekennzeichnet, dass** sie umfasst:
- einen Behälter (5) zur Aufnahme der flüssigen Substanz (3),
- einen Ventilator (39) umfassend Blätter (55) für eine Bewegung der Luft, der in einem Bereich (18) des Behälters (5) oberhalb der flüssigen Substanz (3) angeordnet ist,
- ein Gehäuse (9) zur Kanalisierung, das oberhalb des Bereiches (18) des Behälters (5) angeordnet ist, wobei das Gehäuse (9) mindestens eine Lufteinlassöffnung (3) für den Einlass der Außenluft in die Vorrichtung (1) und einen Entleerungsausgang (20) aufweist und mit dem Bereich (18) des Behälters (5) in Verbindung steht, damit der Ventilator (39) einen Luftstrom in dem Gehäuse (9) erzeugt,
- einen Pulverisator (41) zum Versprühen durch Zentrifugieren der flüssigen Substanz (3) in Form von Tröpfchen in dem Gehäuse (9), um damit durch Vermischung mit dem Luftstrom in einer Vermischungszone (54) des Gehäuses, die stromabwärts des Ventilators (39) in Richtung der Luftstromzirkulation angeordnet ist, einen Nebel (2) aus den Tröpfchen der flüssigen Substanz zu erzeugen,
- ein Rohr (45) zum Ansaugen der flüssigen Substanz (3) in den Pulverisator (41) unter dem Einfluss der Luftstromzirkulation in der Vermischungszone (54), und
- ein Gerät (29) zum Erwärmen der Luft, das stromaufwärts der Vermischungszone (54) des Gehäuses (9) angeordnet ist.

2. Vorrichtung nach Anspruch 1, **dadurch gekennzeichnet, dass** das Gerät (29) zum Erwärmen stromaufwärts der Lufteinlassöffnung(en) (23) des Gehäuses (9) angeordnet ist.

3. Vorrichtung nach Anspruch 1 oder 2, **dadurch gekennzeichnet, dass** sich das Gehäuse (9) stromabwärts der Vermischungszone (54) in Richtung der Luftstromzirkulation verjüngt.

4. Vorrichtung nach einem der vorhergehenden Ansprüche, **dadurch gekennzeichnet, dass** das Gehäuse (9) eine im Wesentlichen konische Form zentriert, auf einer Achse (A) hat, dass sich die Blätter (55) des Ventilators (39) um die Achse (A) drehen, und dass das Rohr (45) zum Ansaugen im Wesentlichen auf der Achse (A) zentriert ist.

5. Vorrichtung nach Anspruch 4, **dadurch gekennzeichnet, dass** der Pulverisator (4) ein Gitter (49) zur Zerstäubung der flüssigen Substanz (3) und eine Zentrifuge (47) zum radialen Versprühen der flüssigen Substanz (3) umfasst, wobei die Zentrifuge (47) dazu bestimm ist, rotierend um die Achse (A) angetrieben zu werden.

6. Vorrichtung nach Anspruch 5, **dadurch gekennzeichnet, dass** die Zentrifuge (47) eine mit dem Zuführrohr (45) in Verbindung stehende Schale (48) umfasst.

7. Vorrichtung nach einem der vorhergehenden Ansprüche 4 bis 6, **dadurch gekennzeichnet, dass** sie einen Motor (43) umfasst, der den Ventilator (39) und den Pulverisator (41) antreibt.

8. Vorrichtung nach einem der vorhergehenden Ansprüche, **dadurch gekennzeichnet, dass** sie eine mit der oder jeder Lufteinlassöffnung (23) in Verbindung stehende Kammer (7) zum Erwärmen der Luft um das Gehäuse (9) herum umfasst, und dass das Gerät (29) zum Erwärmen in der Kammer (7) zum Erwärmen angeordnet ist.

9. Vorrichtung nach einem der vorhergehenden Ansprüche, **dadurch gekennzeichnet, dass** das Gerät (29) zum Erwärmen für eine Erwärmung der Luft auf eine Temperatur von über 150°C ausgelegt ist.

10. Vorrichtung nach Anspruch 9, **dadurch gekennzeichnet, dass** das Gerät (29) zum Erwärmen für eine Erwärmung der Luft auf eine Temperatur von unter 300°C ausgelegt ist.

11. Vorrichtung nach einem der vorhergehenden Ansprüche, **dadurch gekennzeichnet, dass** der Ventilator (39) für das Erzeugen einer Luftmenge von über 10m³/h ausgelegt ist.

12. Vorrichtung nach Anspruch 11, **dadurch gekennzeichnet, dass** der Ventilator (39) für das Erzeugen einer Luftmenge von unter 50 m³/h ausgelegt ist.

13. Vorrichtung nach einem der vorhergehenden Ansprüche, **dadurch gekennzeichnet, dass** sie für das Erzeugen von Nebel mit einer Temperatur von über 100°C ausgelegt ist.

14. Vorrichtung nach Anspruch 13, **dadurch gekennzeichnet, dass** sie für das Erzeugen von Nebel mit einer Temperatur von unter 250°C ausgelegt ist.

15. Vorrichtung nach einem der vorhergehenden Ansprüche, **dadurch gekennzeichnet, dass** sie für das Erzeugen von Nebel mit einer Geschwindigkeit von über 0,1 m/s ausgelegt ist.

16. Vorrichtung nach Anspruch 16, **dadurch gekennzeichnet, dass** sie für das Erzeugen von Nebel mit einer Geschwindigkeit von unter 5 m/s ausgelegt ist.

17. Verwendung einer Vorrichtung (1) nach einem der vorhergehenden Ansprüche, für die Behandlung von Obst und Gemüse.

18. Verwendung einer Vorrichtung nach Anspruch 17, **dadurch gekennzeichnet, dass** ein Nebel (2) mit einer Temperatur von über 100°C erzeugt wird.

19. Verwendung einer Vorrichtung nach Anspruch 18, **dadurch gekennzeichnet, dass** ein Nebel (2) mit einer Temperatur von unter 250°C erzeugt wird.

20. Verwendung einer Vorrichtung nach einem der vorhergehenden Ansprüche 16 bis 19, **dadurch gekennzeichnet, dass** ein Nebel (2) mit einer Geschwindigkeit von über 0,1 m/s erzeugt wird.

21. Verwendung einer Vorrichtung nach Anspruch 20, **dadurch gekennzeichnet, dass** ein Nebel (2) mit einer Geschwindigkeit von unter 5 m/s erzeugt wird.
